# EUROPEAN PATENT APPLICATION

(11) **EP 4 606 605 A1**
(43) Date of publication of application: **27.08.2025**
(21) Application number: 22963038.9
(22) Date of filing: 26.10.2022
(51) Int. Cl.: B60G 17/00, B60G 15/02

(54) **SUSPENSION SYSTEM AND VEHICLE**

(71) Applicant: Shenzhen Yinwang Intelligent Technologies Co., Ltd., Shenzhen, Guangdong 518129 (CN)
(72) Inventor: LIU, Xuhui, Shenzhen, Guangdong 518129 (CN)
(74) Representative: Thun, Clemens
(86) International application number: PCT/CN2022/127666
(87) International publication number: WO 2024/087053

(57) **Abstract**

A suspension system and a vehicle are provided. The suspension system includes a hydraulic assembly and at least one group of shock absorption assemblies. Each group of shock absorption assemblies corresponds to one first oil line (10) and one second oil line (20). Each group of shock absorption assemblies includes a first shock absorber (40) and a second shock absorber (50), where the first shock absorber (40) has a first upper cavity (41) and a first lower cavity (42), and the second shock absorber (50) has a second upper cavity (51) and a second lower cavity (52). At least one first accumulator (60) is connected to the first oil line (10), and the first oil line (10) communicates the first upper cavity (41) with the second upper cavity (51). At least one second accumulator (70) is connected to the second oil line (20), and the second oil line (20) communicates the first lower cavity (42) with the second lower cavity (52). The hydraulic assembly is communicated with the first oil line (10) and the second oil line (20), and the hydraulic assembly is configured to transfer oil in the first oil line (10) and oil in the second oil line (10) to each other. The suspension system occupies small arrangement space and has high adjustment efficiency.

## Description

### TECHNICAL FIELD

This application relates to the field of vehicle technologies, and in particular, to a suspension system and a vehicle.

### BACKGROUND

As the most important means of transportation at present, comfort and safety of automobiles have been paid more attention. A suspension system, as an important part to ensure driving safety and comfort of a vehicle, is mainly responsible for transferring a force and torque between a wheel and a frame, buffering an impact force transferred from an uneven road to the frame or body, and reducing a body vibration caused by the impact force.

In the conventional technology, the suspension system is generally an air suspension, and the air suspension occupies large space, has a poor shock absorption effect, and has low efficiency of adjusting a height of the body.

### SUMMARY

This application provides a suspension system, which occupies small space, has a good shock absorption effect, and has high efficiency of adjusting a body height.

According to a first aspect, this application provides a suspension system. The suspension system may include a hydraulic assembly and at least one group of shock absorption assemblies. Each group of shock absorption assemblies corresponds to one first oil line and one second oil line. One end of the shock absorption assembly is configured to be mounted on a body of a vehicle, and another end of the shock absorption assembly is configured to be mounted on a wheel of the vehicle; and each group of shock absorption assemblies includes a first shock absorber and a second shock absorber, where the first shock absorber has a first upper cavity and a first lower cavity, and the second shock absorber has a second upper cavity and a second lower cavity. At least one first accumulator is connected to the first oil line, and the first oil line communicates the first upper cavity with the second upper cavity. At least one second accumulator is connected to the second oil line, and the second oil line communicates the first lower cavity with the second lower cavity. The hydraulic assembly is communicated with the first oil line and the second oil line, and the hydraulic assembly is configured to transfer oil in the first oil line and oil in the second oil line to each other. Specifically, the hydraulic assembly may control an amount of oil in the first oil line and the second oil line, to control heights of the first shock absorber and the second shock absorber, so as to adjust a height of the body. However, an adjustment rate of hydraulically adjusting the height of the body is high, and a component with a large volume such as a compressor or a gas tank is not required, thereby reducing arrangement space of the suspension system. **In** addition, when the first shock absorber and/or the second shock absorber are/is subject to an action force in a vertical direction, the first accumulator and the second accumulator may play a suppression role, so as to improve a shock absorption capability of the suspension system.

A quantity of first accumulators and a quantity of second accumulators may be adjusted according to an actual requirement. This is not specifically limited herein.

**In** a possible embodiment, to adjust a flow rate of oil in the first oil line and the second oil line, the suspension system may further include a first adjustment assembly and a second adjustment assembly, where the first adjustment assembly is disposed on the first oil line, and the second adjustment assembly is disposed on the second oil line. Specifically, the first adjustment assembly may include a first damping adjustment valve and/or at least one first throttle valve, and the second adjustment assembly may include a second damping adjustment valve and/or at least one second throttle valve.

**In** a possible embodiment, to detect oil pressure in the first oil line and/or the second oil line, the suspension system may further include an oil pressure sensor. There may be two oil pressure sensors for detecting oil pressure in the first oil line and the second oil line respectively. Alternatively, there may be one oil pressure sensor for oil pressure in the first oil line or the second oil line. The oil pressure sensor may further detect an action force of a shock absorber.

**In** a possible embodiment, the at least one group of shock absorption assemblies may include one shock absorption assembly, and the shock absorption assembly may be disposed on a front axle of the vehicle or a rear axle of the vehicle. The hydraulic assembly may include a first motor and a first bidirectional hydraulic motor, and the first bidirectional hydraulic motor is connected to the first motor. In addition, one outlet of the first bidirectional hydraulic motor is communicated with a first oil line corresponding to the shock absorption assembly, and another outlet of the first bidirectional hydraulic motor is communicated with a second oil line corresponding to the shock absorption assembly. In this setting manner, a height of the body corresponding to the front axle or the rear axle can be adjusted, and pitch and vertical postures of the body can be further suppressed.

In a possible embodiment, the at least one group of shock absorption assemblies may include a first shock absorption assembly and a second shock absorption assembly, the first shock absorption assembly may be disposed on a front axle of the vehicle, and the second shock absorption assembly may be disposed on a rear axle of the vehicle. One outlet of the hydraulic assembly is separately communicated with a first oil line corresponding to the first shock absorption assembly and a first oil line corresponding to the second shock absorption assembly, and another outlet of the hydraulic assembly is separately communicated with a second oil line corresponding to the first shock absorption assembly and a second oil line corresponding to the second shock absorption assembly. In this manner, an overall height of the body or a height of a position of the body corresponding to the front axle or the rear axle may be adjusted.

In the foregoing embodiment, the hydraulic assembly may include a second motor, a second bidirectional hydraulic motor, a first intermediate oil line, a second intermediate oil line, a first control valve, and a second control valve. The second bidirectional hydraulic motor is connected to the second motor. The first intermediate oil line communicates a first port of the first control valve with a first port of the second control valve, and the first intermediate oil line is communicated with an outlet of the second bidirectional hydraulic motor. The second intermediate oil line communicates a second port of the first control valve with a second port of the second control valve, and the second intermediate oil line is communicated with an outlet of the second bidirectional hydraulic motor. A third port of the first control valve is communicated with the first oil line corresponding to the first shock absorption assembly, and a fourth port of the first control valve is communicated with the second oil line corresponding to the first shock absorption assembly. A third port of the second control valve is communicated with the first oil line corresponding to the second shock absorption assembly, and a fourth port of the second control valve is communicated with the second oil line corresponding to the second shock absorption assembly. Specifically, when the overall height of the body or the height of the position of the body corresponding to the front axle or the rear axle is adjusted, adjustment may be performed by controlling a rotation direction of the second bidirectional hydraulic motor and controlling opening and closing of each port on the first control valve and the second control valve. Both the first control valve and the second control valve may be two-position four-way valves.

In a possible embodiment, the at least one group of shock absorption assemblies may include a first shock absorption assembly and a second shock absorption assembly. A first shock absorber in the first shock absorption assembly is disposed on a front axle of the vehicle, and a second shock absorber in the first shock absorption assembly is disposed on a rear axle of the vehicle. A first shock absorber in the second shock absorption assembly is disposed on the front axle of the vehicle, and a second shock absorber in the second shock absorption assembly is disposed on the rear axle of the vehicle. It may be understood that the first shock absorption assembly is disposed on a left side of the vehicle, and the second shock absorption assembly is disposed on a right side of the vehicle. In this manner, a left height and/or a right height of the body may be adjusted, and left and right postures of the body may be adjusted.

The hydraulic assembly may include a first hydraulic structure and a second hydraulic structure. One outlet of the first hydraulic structure is communicated with a first oil line in the first shock absorption assembly, and another outlet of the first hydraulic structure is communicated with a second oil line in the first shock absorption assembly. One outlet of the second hydraulic structure is communicated with a first oil line in the second shock absorption assembly, and another outlet of the second hydraulic structure is communicated with a second oil line in the second shock absorption assembly. The first hydraulic structure may include a third motor and a third bidirectional hydraulic motor, and the third motor drives the third bidirectional hydraulic motor to rotate, to adjust an amount of oil in the first oil line and the second oil line corresponding to the first shock absorption assembly, so as to adjust the left height of the body. The second hydraulic structure may include a fourth motor and a fourth bidirectional hydraulic motor, and the fourth motor drives the fourth bidirectional hydraulic motor to rotate, to adjust an amount of oil in the first oil line and the second oil line corresponding to the second shock absorption assembly, so as to adjust the left height of the body.

According to a second aspect, this application further provides a vehicle. The vehicle has a body, a wheel, and the suspension system according to any one of the foregoing technical solutions. The suspension system is disposed between the body and the wheel. The vehicle having the suspension system can have a better shock absorption effect, and can also make the vehicle comfortable and stable.

### BRIEF DESCRIPTION OF DRAWINGS

FIG. 1 is a diagram of a structure of a suspension system according to an embodiment of this application;
FIG. 2 is a diagram of another structure of a suspension system according to an embodiment of this application;
FIG. 3 is a diagram of another structure of a suspension system according to an embodiment of this application;
FIG. 4 is a diagram of another structure of a suspension system according to an embodiment of this application; and
FIG. 5 is a diagram of another structure of a suspension system according to an embodiment of this application.

### Reference numerals:

1-body; 2-wheel; 10, 10a, 10b, 10c, 10d-first oil lines; 20, 20a, 20b, 20c, 20d-second oil lines; 30-hydraulic assembly; 31-first motor; 32-first bidirectional hydraulic motor; 33-second motor; 34-second bidirectional hydraulic motor; 35-first intermediate oil line; 36-second intermediate oil line; 37-first control valve; 38-second control valve; 301-third motor; 302-third bidirectional hydraulic motor; 303-fourth motor; 304-fourth bidirectional hydraulic motor; 40, 40a, 40b, 40c, 40d-first shock absorbers; 41, 41a, 41b, 41c-first upper cavities; 42, 42a, 42b, 42c-first lower cavities; 43-first piston; 44-first piston rod; 50, 50a, 50b, 50c, 50d-second shock absorbers; 51, 51a, 51b, 51c-second upper cavities; 52, 52a, 52b, 52c-second lower cavities; 53-second piston; 54-second piston rod; 60-first accumulator; 70-second accumulator; 80-first adjustment assembly; 81-first damping adjustment valve; 82-first throttle valve; 90-second adjustment assembly; 91-second damping adjustment valve; 92-second throttle valve; 100: oil pressure sensor.

### DESCRIPTION OF EMBODIMENTS

To make the objectives, technical solutions, and advantages of this application clearer, the following further describes this application in detail with reference to the accompanying drawings.

In the conventional technology, a suspension of a vehicle is generally an air suspension, and the air suspension includes a compressor and a gas storage tank. As a result, the air suspension occupies large arrangement space, and efficiency of adjusting a height between a body and a chassis by the air suspension is low.

Therefore, embodiments of this application provide a suspension system, to improve an adjustment effect and reduce occupied space.

To make the objectives, technical solutions, and advantages of this application clearer, the following further describes an optical device provided in this application in detail with reference to the accompanying drawings and specific embodiments.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expression forms, for example, "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but not limited to", unless otherwise specifically emphasized in another manner.

The suspension system provided in embodiments of this application is mainly used in a vehicle. The vehicle may include a body and a chassis. The body is disposed on the chassis. The suspension system is disposed between the body and the chassis. Four wheels are disposed on the chassis. The vehicle having the suspension system has high comfort and stability. An elastic component may be further disposed between the chassis and the body, and the elastic component is disposed on a side close to the suspension system, so as to improve a shock absorption effect. Specifically, the elastic component may be but is not limited to a spring or an air spring.

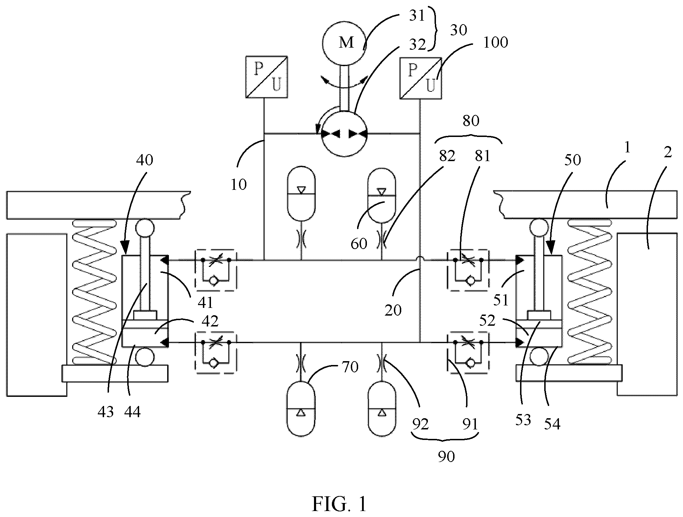

Refer to FIG. 1. The suspension system may include a hydraulic assembly and at least one group of shock absorption assemblies. One end of the shock absorption assembly is installed on a body 1 of the vehicle, and another end of the shock absorption assembly is installed on a wheel 2 of the vehicle. Each group of shock absorption assemblies corresponds to one first oil line 10 and one second oil line 20. The first oil line 10 is communicated with one outlet of the hydraulic assembly 30, and the second oil line 20 is communicated with another outlet of the hydraulic assembly 30. The hydraulic assembly 30 may transfer oil in the first oil line 10 and oil in the second oil line 20 to each other. Each group of shock absorption assemblies may include a first shock absorber 40 and a second shock absorber 50. The first shock absorber 40 has a first upper cavity 41 and a first lower cavity 42, and the second shock absorber 50 has a second upper cavity 51 and a second lower cavity 52. The first oil line 10 communicates the first upper cavity 41 with the second upper cavity 51, and at least one first accumulator 60 may be disposed on the first oil line 10. The second oil line 20 communicates the first lower cavity 42 with the second lower cavity 52, and at least one second accumulator 70 may be disposed on the second oil line 20. Specifically, the hydraulic assembly may transfer and reallocate oil in the first upper cavity 41, the second upper cavity 51, and the first oil line 10 used for communicating the first upper cavity 41 with the second upper cavity 51, and oil in the first lower cavity 42, the second lower cavity 52, and the second oil line 20 used for communicating the first lower cavity 42 with the second lower cavity 52, so as to control heights of the first shock absorber 40 and the second shock absorber 50, thereby adjusting a height of the body of the vehicle. In addition, when the first shock absorber 40 and/or the second shock absorber 50 are/is subject to a vertical downward force, at least a part of oil in the first lower cavity 42 and/or the second lower cavity 52 enters the second accumulator 70, and the second accumulator 70 may suppress a compression amount of the first shock absorber 40 and/or the second shock absorber 50 in a vertical direction, so as to suppress movement of the body of the vehicle in the vertical direction, thereby improving a shock absorption capability. When the first shock absorber 40 and the second shock absorber 50 are subject to a vertical upward force, the first accumulator 60 can also suppress the compression amount of the first shock absorber 40 and/or the second shock absorber 50 in the vertical direction. In a manner of controlling an amount of oil in the first oil line 10 and the second oil line 20 by using the hydraulic assembly, the height of the body is adjusted fast, and a hydraulic oil line occupies small space, thereby improving comfort of the vehicle.

The first shock absorber 40 may include a first piston 43 and a first piston rod 44. A first end of the first piston rod 44 is slidably disposed in the first piston 43. The first end of the first piston rod 44 divides the first piston 43 into the first upper cavity 41 and the first lower cavity 42 that are isolated. A second end of the first piston rod 44 is connected to the body 1 or the wheel 2. A moving track of the first piston rod 44 may be controlled by controlling an amount of oil in the first upper cavity 41 and/or the first lower cavity 42, so as to adjust the height of the body.

The second shock absorber 50 may include a second piston 53 and a second piston rod 54. A second end of the second piston rod 54 is slidably disposed in the second piston 53. The second end of the second piston rod 54 divides the second piston 53 into the second upper cavity 51 and the second lower cavity 52 that are isolated. The second end of the second piston rod 54 is connected to the body 1 or the wheel 2. A moving track of the second piston rod 54 may be controlled by controlling an amount of oil in the second upper cavity 51 and/or the second lower cavity 52, so as to adjust the height of the body.

Still refer to FIG. 1. Two wheels 2 in FIG. 1 are two front wheels or two rear wheels. In a specific implementation process, when there is one group of shock absorption assemblies, first shock absorbers 40 and second shock absorbers 50 included in the shock absorption assemblies may be disposed between the front wheels at two ends and the body, that is, the shock absorption assemblies are disposed on a front axle of the vehicle; or first shock absorbers 40 and second shock absorbers 50 included in the shock absorption assemblies may be disposed between the two rear wheels and the body, that is, the shock absorption assemblies are disposed on a rear axle of the vehicle. In this case, the hydraulic assembly 30 may include a first motor 31 and a first bidirectional hydraulic motor 32 connected to the first motor 31, and the first bidirectional hydraulic motor 32 is communicated with the first oil line 10 and the second oil line 20. A first adjustment assembly 80 and two first accumulators 60 may be further disposed on the first oil line 10 that communicates the first upper cavity 41 of the first shock absorber 40 with the second upper cavity 51 of the second shock absorber 50. In addition, the first adjustment assembly 80 may include two first damping adjustment valves 81 and two first throttle valves 82. The two first damping adjustment valves 81 may be respectively disposed at an outlet of the first upper cavity 41 and an outlet of the second upper cavity 51, and the first damping adjustment valves 81 may better control the flow of oil in the first oil line 10. The two first throttle valves 82 are respectively disposed at outlets of the two first accumulators 60, to buffer the first accumulators 60. A second adjustment assembly 90 and two second accumulators 70 may be further disposed on the second oil line 20 that communicates the first lower cavity 42 of the first shock absorber 40 with the second lower cavity 52 of the second shock absorber 50. In addition, the second adjustment assembly 90 may include two second damping adjustment valves 91 and two second throttle valves 92. The two second damping adjustment valves 91 may be respectively disposed at an outlet of the first lower cavity 42 and an outlet of the second lower cavity 52, and the second damping adjustment valves 91 may better control the flow of oil in the second oil line. The two second throttle valves 92 are respectively disposed at outlets of the two second accumulators 70, to buffer the second accumulators 70. In this setting manner, by controlling the first bidirectional hydraulic motor 32, the amount of oil in the first oil line 10 and the second oil line 20 may be adjusted, to adjust a height of the front axle or the rear axle of the vehicle. Specifically, the first bidirectional hydraulic motor 32 may quickly and quantitatively pump oil in the first oil line 10 to the second oil line 20, a decrease in the amount of oil in the first oil line 10, that is, a decrease in the amount of oil in the first upper cavity 41 and the second upper cavity 51, causes a pressure decrease, an increase in the amount of oil in the second oil line 20 causes a pressure increase, and a pressure difference acts on the first shock absorber 40 and the second shock absorber 50, so that the first shock absorber 40 and the second shock absorber 50 are extended, to generate a pushing force on the body and the wheel, thereby increasing the height of the body. Alternatively, the first bidirectional hydraulic motor 32 may quickly and quantitatively pump oil in the second oil line 20 to the first oil line 10, a decrease in the amount of oil in the second oil line 20, that is, a decrease in the amount of oil in the first lower cavity 42 and the second lower cavity 52, causes a pressure decrease, an increase in the amount of oil in the first oil line 10 causes a pressure increase, and a pressure difference acts on the first shock absorber 40 and the second shock absorber 50, so that the first shock absorber 40 and the second shock absorber 50 are compressed, to generate a pulling force on the body and the wheel, thereby reducing the height of the body.

When the vehicle undergoes a large vertical vibration or a large pitch motion, the first oil line 10 or the second oil line 20 is in a compressed state. When the first oil line 10 is compressed, oil in the first oil line 10 enters the two first accumulators 60, and the oil flowing into the first accumulators 60 compresses the gas in the first accumulators 60 to form pressure, to generate a reverse force. Similarly, when the second oil line 20 is compressed, oil in the second oil line 20 enters the two second accumulators 70, and the oil flowing into the second accumulators 70 compresses the gas in the second accumulators 70 to form pressure, to generate a reverse force. This can suppress a pitch posture and a vertical posture, thereby improving comfort and operation stability of the vehicle.

In the foregoing embodiment, there may be only one first damping adjustment valve 81 in the first oil line 10, and there may be only one second damping adjustment valve 91 in the second oil line 20.

To detect oil pressure in the first oil line 10 and the second oil line 20, one oil pressure sensor 100 may be disposed in each of the first oil line 10 and the second oil line 20. In a specific implementation process, the oil pressure sensor 100 may alternatively be disposed only in the first oil line 10 or the second oil line 20.

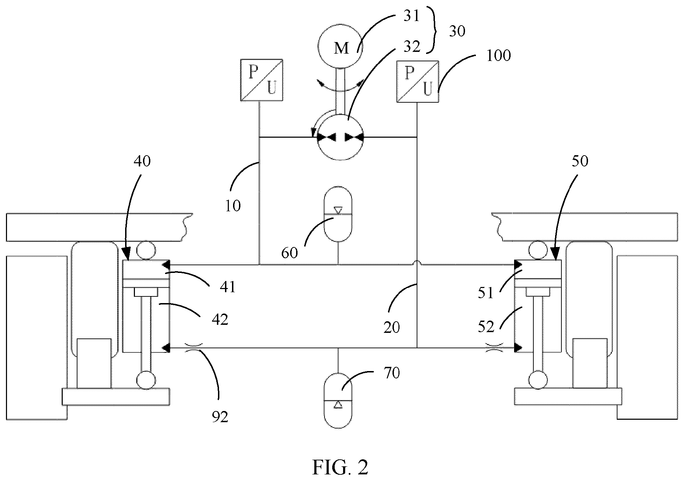

Refer to FIG. 2. In a possible embodiment, when there is one group of shock absorption assemblies, first shock absorbers 40 and second shock absorbers 50 included in the shock absorption assemblies may be disposed between the front wheels at two ends and the body, that is, the shock absorption assemblies are disposed on a front axle of the vehicle; or first shock absorbers and second shock absorbers may be disposed between the two rear wheels and the body, that is, the shock absorption assemblies are disposed on a rear axle of the vehicle. In this case, the hydraulic assembly 30 may include a first motor 31 and a first bidirectional hydraulic motor 32 connected to the first motor 31, and the first bidirectional hydraulic motor 32 is communicated with the first oil line 10 and the second oil line 20. One first accumulator 60 may be further disposed on the first oil line 10 that communicates the first upper cavity 41 of the first shock absorber 40 with the second upper cavity 51 of the second shock absorber 50. A second adjustment assembly 90 and one second accumulator 70 may be further disposed on the second oil line 20 that communicates the first lower cavity 42 of the first shock absorber 40 with the second lower cavity 52 of the second shock absorber 50. In addition, the second adjustment assembly may include two second throttle valves 92, and the two second throttle valves 92 may be respectively disposed at an outlet of the first lower cavity 42 and an outlet of the second lower cavity 52. When the second throttle valves 92 are specifically disposed, the second throttle valves 92 may be calibrated to ensure adjustment of oil in the second oil line 20.

In this implementation, to detect oil pressure in the first oil line 10 and the second oil line 20, one oil pressure sensor 100 may be disposed in each of the first oil line 10 and the second oil line 20. In a specific implementation process, the oil pressure sensor 100 may alternatively be disposed only in the first oil line 10 or the second oil line 20.

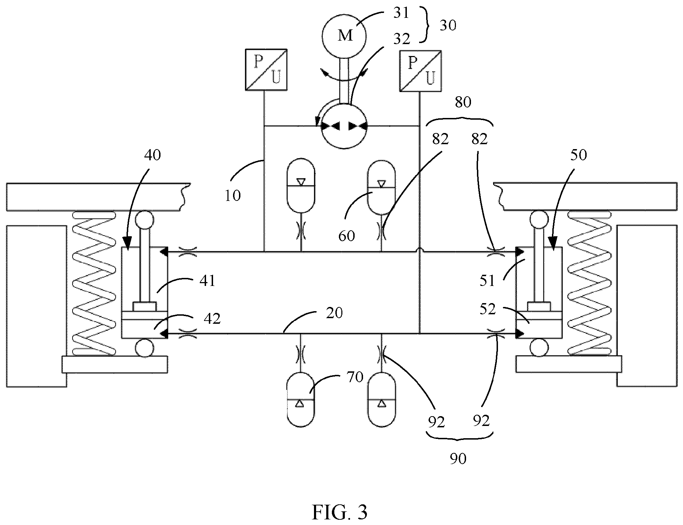

Refer to FIG. 3. In a possible embodiment, when there is one group of shock absorption assemblies, first shock absorbers 40 and second shock absorbers 50 in the shock absorption assemblies may be separately disposed between the front wheels at two ends and the body, that is, the shock absorption assemblies are disposed on a front axle of the vehicle; or first shock absorbers and second shock absorbers may be separately disposed between the two rear wheels and the body, that is, the shock absorption assemblies are disposed on a rear axle of the vehicle. In this case, the hydraulic assembly 30 may include a first motor 31 and a first bidirectional hydraulic motor 32 connected to the first motor 31, and the first bidirectional hydraulic motor 32 is communicated with the first oil line 10 and the second oil line 20. A first adjustment assembly 80 and two first accumulators 60 may be further disposed on the first oil line 10 that communicates the first upper cavity 41 of the first shock absorber 40 with the second upper cavity 51 of the second shock absorber 50. The first adjustment assembly 80 may include four first throttle valves 82. Two of the first throttle valves 82 are respectively disposed at an outlet of the first upper cavity 41 and an outlet of the second upper cavity 51, to control a flow rate of oil in the first oil line 10; and the other two of the first throttle valves 82 are respectively disposed at outlets of the two first accumulators 60, to buffer the first accumulators 60. Similarly, a second adjustment assembly 90 and two second accumulators 70 may be further disposed on the second oil line 20 that communicates the first lower cavity 42 of the first shock absorber 40 with the second lower cavity 52 of the second shock absorber 50. In addition, the second adjustment assembly 90 may include four second throttle valves 92. Two of the second throttle valves 92 are respectively disposed at an outlet of the first lower cavity 42 and an outlet of the second lower cavity 52, to control a flow rate of oil in the second oil line 20; and the other two of the second throttle valves 92 are respectively disposed at outlets of the two second accumulators 70, to buffer the second accumulators 70.

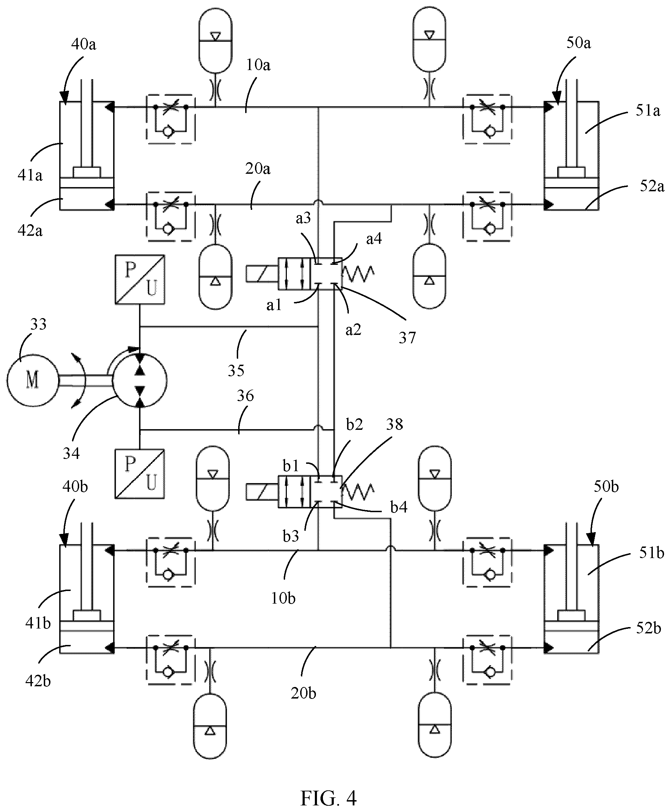

Refer to FIG. 4. In a possible embodiment, the at least one group of shock absorption assemblies may include a first shock absorption assembly and a second shock absorption assembly, the first shock absorption assembly may be disposed on a front axle of the vehicle, the second shock absorption assembly may be disposed on a rear axle of the vehicle, both a first oil line 10a corresponding to the first shock absorption assembly and a first oil line 10b corresponding to the second shock absorption assembly are communicated with one outlet of the hydraulic assembly, and both a second oil line 20a corresponding to the first shock absorption assembly and a second oil line 20b corresponding to the second shock absorption assembly are communicated with another outlet of the hydraulic assembly. More specifically, a first shock absorber 40a in the first shock absorption assembly may be disposed between a left wheel of the front axle and the body, a second shock absorber 50a in the first shock absorption assembly may be disposed between a right wheel of the front axle and the body, a first shock absorber 40b in the second shock absorption assembly may be disposed between a left wheel of the rear axle and the body, a second shock absorber 50b in the second shock absorption assembly may be disposed between a right wheel of the rear axle and the body, a first upper cavity 41a of the first shock absorber 40a in the first shock absorption assembly is communicated with a second upper cavity 51a of the second shock absorber 50a in the first shock absorption assembly through the first oil line 10a corresponding to the first shock absorption assembly, and a first lower cavity 42a of the first shock absorber 40a in the first shock absorption assembly is communicated with a second lower cavity 52a of the second shock absorber 50a in the first shock absorption assembly through the second oil line 20a corresponding to the first shock absorption assembly. Similarly, a first upper cavity 41b of the first shock absorber 40b in the second shock absorption assembly is communicated with a second upper cavity 51b of the second shock absorber 50b in the first shock absorption assembly through the first oil line 10b corresponding to the second shock absorption assembly, a first lower cavity 42b of the first shock absorber 40b in the second shock absorption assembly is communicated with a second lower cavity 52b of the second shock absorber 50b in the second shock absorption assembly through the second oil line 20b corresponding to the second shock absorption assembly, and the first oil line 10a and the second oil line 20a corresponding to the first shock absorption assembly may be communicated with the first oil line 10b and the second oil line 20b corresponding to the second shock absorption assembly through the hydraulic assembly. By controlling the hydraulic assembly, the front axle of the body may be raised or lowered, or the rear axle of the body may be raised or lowered, or the entire body may be raised or lowered. In addition, a first accumulator, a second accumulator, a first adjustment assembly, and a second adjustment assembly are disposed in the first oil line and the second oil line in the first shock absorption assembly and/or the second shock absorption assembly, to suppress a vertical posture or a pitch posture of the body.

Still refer to FIG. 4. In FIG. 4, a1 is a first port of a first control valve, a2 is a second port of the first control valve, a3 is a third port of the first control valve, and a4 is a fourth port of the first control valve; and b1 is a first port of a second control valve, b2 is a second port of the second control valve, b3 is a third port of the second control valve, and b4 is a fourth port of the second control valve. The hydraulic assembly may include a second motor 33, a second bidirectional hydraulic motor 34, a first intermediate oil line 35, a second intermediate oil line 36, the first control valve 37, and the second control valve 38. The first port a1 of the first control valve 37 is communicated with the first port b1 of the second control valve 38 through the first intermediate oil line 35, and the first intermediate oil line 35 is further communicated with an outlet of the second bidirectional hydraulic motor 34. The second port a2 of the first control valve 37 is communicated with the second port b2 of the second control valve 38 through the second intermediate oil line 36, and the second intermediate oil line 36 is communicated with another outlet of the second bidirectional hydraulic motor 34. The third port a3 of the first control valve 37 is communicated with the first oil line 10a corresponding to the first shock absorption assembly. The fourth port a4 of the first control valve 37 is communicated with the second oil line 20a corresponding to the first shock absorption assembly. The third port b3 of the second control valve 38 is communicated with the first oil line 10b corresponding to the second shock absorption assembly. The fourth port b4 of the second control valve 38 is communicated with the second oil line 20b corresponding to the second shock absorption assembly.

When a position of the body corresponding to the front axle needs to be raised, the first control valve 37 may be controlled to be connected, and the second control valve 38 may be controlled to be disconnected, that is, the first port a1 of the first control valve 37 is connected to the third port a3 of the first control valve 37, and the second port a2 of the first control valve 37 is connected to the fourth port a4 of the first control valve 37. Under the action of the second bidirectional hydraulic motor 34, oil in the first oil line 10a corresponding to the first shock absorption assembly may quickly and quantitatively enter the second bidirectional hydraulic motor 34 through the third port a3 and the first port a1 of the first control valve 37 and the first intermediate oil line 35, and then enter the second oil line 20a corresponding to the first shock absorption assembly through the second intermediate oil line 36, and the second port a2 and the fourth port a4 of the first control valve 37. **In** this way, an amount of oil in the first oil line 10a corresponding to the first shock absorption assembly decreases, that is, an amount of oil in the first upper cavity 41a in the first shock absorber 40a and the second upper cavity 51a in the second shock absorber 50a included in the first shock absorption assembly decreases, causing a pressure decrease; an amount of oil in the second oil line 20a corresponding to the first shock absorption assembly increases, that is, an amount of oil in the first lower cavity 42a in the first shock absorber 40a and the second lower cavity 52a in the second shock absorber 50a included in the first shock absorption assembly increases, causing a pressure increase; and a pressure difference acts on the first shock absorber 40a and the second shock absorber 50a in the first shock absorption assembly, so that the first shock absorber 40a and the second shock absorber 50a are extended, to generate a pushing force on the body and the wheel, thereby increasing a height of the body on the front axle.

When a position of the body corresponding to the front axle needs to be lowered, the first control valve 37 is controlled to be connected, and the second control valve 38 is controlled to be disconnected, that is, the first port a1 of the first control valve 37 is connected to the third port a3 of the first control valve 37, and the second port a2 of the first control valve 37 is connected to the fourth port a4 of the first control valve 37. Under the action of the second bidirectional hydraulic motor 34, oil in the second oil line 20a corresponding to the first shock absorption assembly may quickly and quantitatively enter the second bidirectional hydraulic motor 34 through the fourth port a4 and the second port a2 of the first control valve 37 and the second intermediate oil line 36, and then enter the first oil line 10a corresponding to the first shock absorption assembly through the first intermediate oil line 35, and the first port a1 and the third port a3 of the first control valve 37. **In** this way, an amount of oil in the second oil line 20a corresponding to the first shock absorption assembly decreases, that is, an amount of oil in the first lower cavity 42a and the second lower cavity 52a in the first shock absorption assembly decreases, causing a pressure decrease; an amount of oil in the first oil line 10a corresponding to the first shock absorption assembly increases, causing a pressure increase; and a pressure difference acts on the first shock absorber 40a and the second shock absorber 50a in the first shock absorption assembly, so that the first shock absorber 40a and the second shock absorber 50a are compressed, to generate a pulling force on the body and the wheel, thereby reducing a height of the body on the front axle.

When a position of the body corresponding to the rear axle needs to be raised or lowered, a specific manner is the same as that of raising or lowering the position of the body corresponding to the front axis. Details are not described herein again.

When the overall height of the body needs to be increased, both the first control valve 37 and the second control valve 38 need to be conducted, the first port a1 of the first control valve 37 is connected to the third port a3 of the first control valve 37, the second port a2 of the first control valve 37 is connected to the fourth port a4 of the first control valve 37, the first port b1 of the second control valve 38 is connected to the third port b3 of the second control valve 38, and the second port b2 of the second control valve 38 is connected to the fourth port b4 of the second control valve 38. In this way, oil in the first oil line 10a corresponding to the first shock absorption assembly and oil in the first oil line 10b corresponding to the second shock absorption assembly may enter the second oil line 20a corresponding to the first shock absorption assembly and the second oil line 20b corresponding to the second shock absorption assembly under the action of the second bidirectional hydraulic motor 34, so that the first shock absorber 40a and the second shock absorber 50a in the first shock absorption assembly and the first shock absorber 40b and the second shock absorber 50b in the second shock absorption assembly are extended, to generate a pushing force on the body and the wheel, thereby increasing the overall height of the body. A manner of reducing the overall height of the body is similar to that of increasing the height of the body, provided that oil in the second oil line 20a corresponding to the first shock absorption assembly and oil in the second oil line 20b corresponding to the second shock absorption assembly may enter the first oil line 10a corresponding to the first shock absorption assembly and the first oil line 10b corresponding to the second shock absorption assembly under the action of the second bidirectional hydraulic motor 34.

Both the first control valve 37 and the second control valve 38 may be two-position four-way valves.

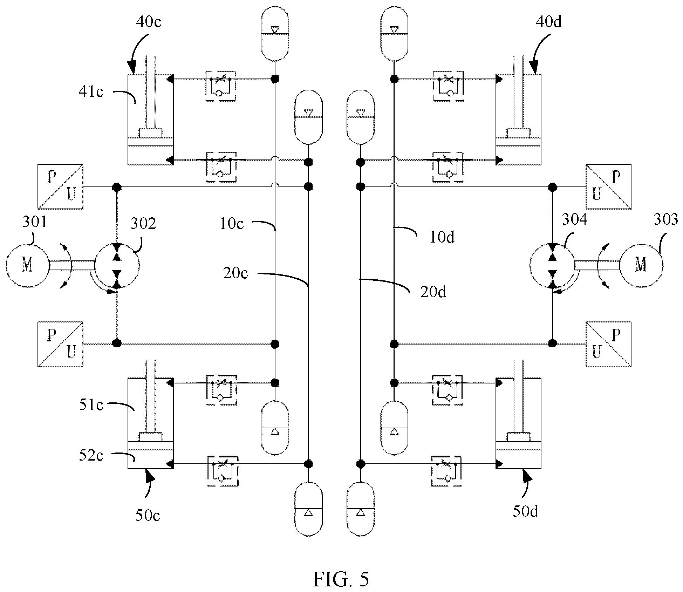

Refer to FIG. 5. In a possible embodiment, the at least one group of shock absorption assemblies includes a first shock absorption assembly and a second shock absorption assembly, a first shock absorber 40c in the first shock absorption assembly may be disposed on a front axle of the vehicle (a left front wheel of the vehicle), a second shock absorber 50c in the first shock absorption assembly may be disposed on a rear axle of the vehicle (a left rear wheel of the vehicle), a first shock absorber 40d in the second shock absorption assembly may be disposed on the front axle of the vehicle (a right front wheel of the vehicle), and a second shock absorber 50d in the second shock absorption assembly may be disposed on the rear axle of the vehicle (a right rear wheel of the vehicle). The hydraulic assembly may include a first hydraulic structure and a second hydraulic structure. One outlet of the first hydraulic structure is communicated with a first oil line 10c corresponding to the first shock absorption assembly, and another outlet of the first hydraulic structure is communicated with a second oil line 20c corresponding to the first shock absorption assembly. One outlet of the second hydraulic structure is communicated with a first oil line 10d corresponding to the second shock absorption assembly, and another outlet of the second hydraulic structure is communicated with a second oil line 20d corresponding to the second shock absorption assembly. The first hydraulic structure may include a third motor 301 and a third bidirectional hydraulic motor 302, and the second hydraulic structure may include a fourth motor 303 and a fourth bidirectional hydraulic motor 304. A first accumulator, a second accumulator, a first adjustment assembly, and a second adjustment assembly are disposed in the first oil line 10c and the second oil line 20c corresponding to the first shock absorption assembly and/or the first oil line 10d and the second oil line 20d corresponding to the second shock absorption assembly, to suppress a vertical posture or a roll posture of the body. In this case, the first adjustment assembly may be but is not limited to a first damping adjustment valve, and the second adjustment assembly may be but is not limited to a second damping adjustment valve.

When a left position of the body needs to be raised, the third bidirectional hydraulic motor 302 may quickly and quantitatively pump oil in the first oil line 10c corresponding to the first shock absorption assembly to the second oil line 20c corresponding to the first shock absorption assembly. In this way, an amount of oil in the first oil line 10c corresponding to the first shock absorption assembly decreases, that is, an amount of oil in a first upper cavity 41c in the first shock absorber 40c in the first shock absorption assembly and a second upper cavity 51c in the second shock absorber 50c in the first shock absorption assembly decreases, causing a pressure decrease; an amount of oil in the second oil line 20c increases, that is, an amount of oil in a first lower cavity 42c in the first shock absorber 40c and a second lower cavity 52c in the second shock absorber 50c included in the first shock absorption assembly increases, causing a pressure increase; and a pressure difference acts on the first shock absorber 40c and the second shock absorber 50c corresponding to the first shock absorption assembly, so that the first shock absorber 40c and the second shock absorber 50c are extended, to generate a pushing force on the body and the wheel, thereby increasing a left height of the body. Similarly, a manner of raising a right position of the body is the same as that of raising the left position of the body. Details are not described herein again.

When left and right heights of the body need to be simultaneously adjusted, the third bidirectional hydraulic motor 302 and the fourth bidirectional hydraulic motor 304 are simultaneously driven. When the left or right height of the body needs to be reduced, or the left and right heights of the body need to be reduced, only a steering direction of the third bidirectional hydraulic motor 302 or the fourth bidirectional hydraulic motor 304 needs to be adjusted.

When the vehicle undergoes a large vertical vibration or a large roll motion, the first oil line 10c or the second oil line 20c corresponding to the first shock absorption assembly is in a compressed state, and/or the first oil line 10d or the second oil line 20d corresponding to the second shock absorption assembly is in a compressed state. When the first oil line 10c and/or the first oil line 10d are/is compressed, oil in the first oil line 10c and/or the first oil line 10d enters the two first accumulators, and the oil flowing into the first accumulators compresses the gas in the first accumulators to form pressure, to generate a reverse force. Similarly, when the second oil line 20c and/or the second oil line 20d are/is compressed, oil in the second oil line 20c and/or the second oil line 20d enters the two second accumulators, and the oil flowing into the second accumulators compresses the gas in the second accumulators to form pressure, to generate a reverse force. This can suppress a roll posture and a vertical posture, thereby improving comfort and operation stability of the vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A suspension system, comprising a hydraulic assembly and at least one group of shock absorption assemblies, wherein each group of shock absorption assemblies corresponds to one first oil line and one second oil line;
one end of the shock absorption assembly is configured to be mounted on a body of a vehicle, and another end of the shock absorption assembly is configured to be mounted on a wheel of the vehicle; and each group of shock absorption assemblies comprises a first shock absorber and a second shock absorber, wherein the first shock absorber has a first upper cavity and a first lower cavity, and the second shock absorber has a second upper cavity and a second lower cavity;
at least one first accumulator is connected to the first oil line, and the first oil line communicates the first upper cavity with the second upper cavity;
at least one second accumulator is connected to the second oil line, and the second oil line communicates the first lower cavity with the second lower cavity; and
the hydraulic assembly, wherein the hydraulic assembly is communicated with the first oil line and the second oil line, and the hydraulic assembly is configured to transfer oil in the first oil line and oil in the second oil line to each other.

2. The suspension system according to claim 1, wherein the suspension system further comprises a first adjustment assembly, the first adjustment assembly is disposed on the first oil line, and the first adjustment assembly is configured to adjust a flow rate of oil in the first oil line.

3. The suspension system according to claim 2, wherein the suspension system further comprises a second adjustment assembly, the second adjustment assembly is disposed on the second oil line, and the second adjustment assembly is used for a flow rate of oil in the second oil line.

4. The suspension system according to claim 3, wherein the first adjustment assembly comprises a first damping adjustment valve and/or a first throttle valve, and the second adjustment assembly comprises a second damping adjustment valve and/or a second throttle valve.

5. The suspension system according to any one of claims 1 to 4, wherein the suspension system further comprises an oil pressure sensor configured to detect oil pressure in the first oil line and/or the second oil line.

6. The suspension system according to any one of claims 1 to 5, wherein the at least one group of shock absorption assemblies comprises one shock absorption assembly, and the shock absorption assembly is disposed on a front axle of the vehicle or a rear axle of the vehicle; and
the hydraulic assembly comprises a first motor and a first bidirectional hydraulic motor connected to the first motor, wherein one outlet of the first bidirectional hydraulic motor is communicated with a first oil line corresponding to the shock absorption assembly, and another outlet of the first bidirectional hydraulic motor is communicated with a second oil line corresponding to the shock absorption assembly.

7. The suspension system according to any one of claims 1 to 5, wherein the at least one group of shock absorption assemblies comprises a first shock absorption assembly and a second shock absorption assembly, the first shock absorption assembly is disposed on a front axle of the vehicle, and the second shock absorption assembly is disposed on a rear axle of the vehicle; and
one outlet of the hydraulic assembly is separately communicated with a first oil line corresponding to the first shock absorption assembly and a first oil line corresponding to the second shock absorption assembly, and another outlet of the hydraulic assembly is separately communicated with a second oil line corresponding to the first shock absorption assembly and a second oil line corresponding to the second shock absorption assembly.

8. The suspension system according to claim 7, wherein the hydraulic assembly comprises a second motor, a second bidirectional hydraulic motor, a first intermediate oil line, a second intermediate oil line, a first control valve, and a second control valve, wherein
the second bidirectional hydraulic motor is connected to the second motor; the first intermediate oil line communicates a first port of the first control valve with a first port of the second control valve, and the first intermediate oil line is communicated with an outlet of the second bidirectional hydraulic motor; the second intermediate oil line communicates a second port of the first control valve with a second port of the second control valve, and the second intermediate oil line is communicated with an outlet of the second bidirectional hydraulic motor; a third port of the first control valve is communicated with the first oil line corresponding to the first shock absorption assembly, and a fourth port of the first control valve is communicated with the second oil line corresponding to the first shock absorption assembly; and a third port of the second control valve is communicated with the first oil line corresponding to the second shock absorption assembly, and a fourth port of the second control valve is communicated with the second oil line corresponding to the second shock absorption assembly.

9. The suspension system according to claim 8, wherein both the first control valve and the second control valve are two-position four-way valves.

10. The suspension system according to any one of claims 1 to 5, wherein the at least one group of shock absorption assemblies comprises a first shock absorption assembly and a second shock absorption assembly, wherein a first shock absorber in the first shock absorption assembly is disposed on a front axle of the vehicle, and a second shock absorber in the first shock absorption assembly is disposed on a rear axle of the vehicle; and a first shock absorber in the second shock absorption assembly is disposed on the front axle of the vehicle, and a second shock absorber in the second shock absorption assembly is disposed on the rear axle of the vehicle.

11. The suspension system according to claim 10, wherein the hydraulic assembly comprises a first hydraulic structure and a second hydraulic structure, wherein one outlet of the first hydraulic structure is communicated with a first oil line corresponding to the first shock absorption assembly, and another outlet of the first hydraulic structure is communicated with a second oil line corresponding to the first shock absorption assembly; and one outlet of the second hydraulic structure is communicated with a first oil line corresponding to the second shock absorption assembly, and another outlet of the second hydraulic structure is communicated with a second oil line corresponding to the second shock absorption assembly.

12. A vehicle, comprising a body, a wheel, and the suspension system according to any one of claims 1 to 11, wherein the suspension system is disposed between the body and the wheel.
